# EUROPEAN PATENT SPECIFICATION

(11) **EP 2 149 830 B1**
(45) Date of publication and mention of the grant of the patent: **04.01.2012**
(21) Application number: 08013607.0
(22) Date of filing: 29.07.2008
(51) Int. Cl.: G05B 19/418

(54) **An automation system and method for its operation**
Automatisierungssystem und Betriebsverfahren dafür
Système automatique et son procédé de fonctionnement

(43) Date of publication of application: 03.02.2010
(73) Proprietor: Siemens Milltronics Process Instruments Inc., Peterborough, Ontario K9J 7B1 (CA)
(72) Inventor: Larocque, Jean-René, Dr., Peterborough, K9J 8E1 Ontario (CA); Lyon, George Quinton, Peterborough K9K 1T9 Ontario (CA)
(74) Representative: Bischoff, Hans-Gerhard

(56) References cited:
- US-A- 6 047 222
- US-A1- 2002 184 410

## Description

The present invention relates to an automation system comprising a plurality of peripheral devices connected to a communication system, each device comprising a predefined functionality for performing a predefined function as part of the automation and for exchanging data that is relevant for the device or its function within the automation system, wherein at least some of the peripheral devices which have identical functionalities or identical sub-functionalities are designed to exchange output data generated by the functionalities or sub-functionalities in order to diagnose a malfunction.

The invention further relates to a method for operating such an automation system.

Such a system and method are known from US 2002/0184410 A1.

In automation systems for technical or industrial plants in e.g. process, production and manufacturing industry, for building automation, power distribution automation, etc., peripheral devices perform predefined functions as part of the automation and thereby exchange data between each other and/or a superordinate control system or unit. Peripheral devices here are understood to include process or field devices, such as sensors or measuring transducers for pressure, temperature, flow rate, filling level, etc., gas or liquid analyzers, and actuators, regulators or controllers for e.g. temperature or valve position control. Thus, each device comprises a predefined functionality for performing its predefined function. This functionality, e.g. the capability to measure a process variable, is usually subdivided into sub-functionalities, such as sensor signal capturing and pre-processing, analog-to-digital converting, signal processing and evaluation, calibration, etc. To exchange data within the automation system, the peripheral devices are interlinked via field buses or other communication pathways together with the central or decentralized control system that is designed for operation and observation of the automation system.

It is required that the peripheral devices are able to perform self-diagnostics, i.e. to detect conditions where they can no longer operate correctly. Many failures are obvious and can be easily detected as they are usually critical failures which cause device downtime. Other failures, such as poor calibration, poor configuration or bad analog-to-digital conversion, are more subtle; the device appears to function properly but in reality is reporting data very poorly.

It is known to have redundant devices in automation processes that require condition monitoring. The superordinate control system may compare the output results of the redundant devices to detect malfunctions.

In the known system an method of the above mentioned US 2002/0184410 A1, the devices are redundant and are each provided with the capability of performing fault detection of the other device and based on the output data of the other device.

It is an object of the invention to expand the capability of self-diagnosis in an automation system.

According to the invention this object is achieved by the automation system of claim 1 and the method defined in claim 3.

Thus, according to the invention, at least some of the peripheral devices which have at least one identical sub-functionality are designed to exchange input data to be processed by said sub-functionality of the respective other device or devices, to compare the output data generated by the sub-functionality of the different devices and to diagnose a malfunction in case of discrepancy between the compared output data. For example, in a time-of-flight or level measurement device, a digitized echo profile which has to be processed to extract echoes of interest is additionally transmitted to other level measurement devices which contain similar signal processing algorithms, and the extracted relevant echoes are compared. These devices do not necessarily have to be redundant as long as the sub-functionality, here the signal processing algorithm, is the same.

In accordance with the invention, it is also possible to transmit an analog signal, which has to be converted from analog to digital in one of the devices, to other devices which also contain analog-to-digital converters, and to compare the obtained digitized signals. In this case, however, additional wiring will be needed to exchange the analog signals between the devices.

The invention will be now described by way of a preferred example and with reference to the accompanying drawing, in which:
- Figure 1: shows an exemplary embodiment of an process automation system and
- Figure 2: is an example of two peripheral devices of the automation system.

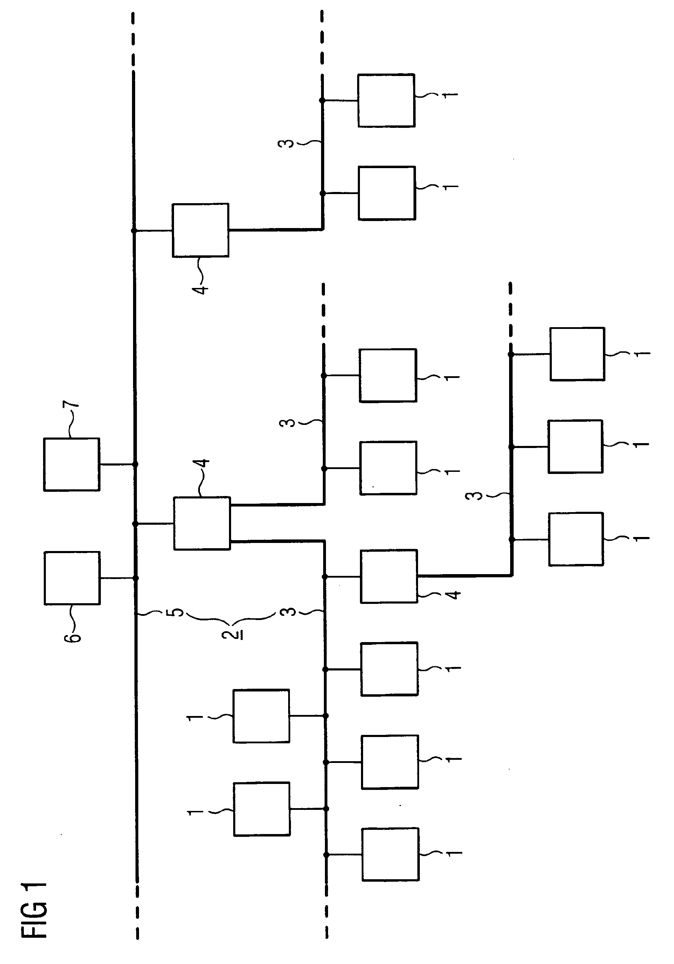

Reference is first made to Figure 1 which exemplarily shows a schematic diagram of a process automation system having a plurality of peripheral field or process devices 1. These devices 1 execute predetermined measurement and control functions as part of the process automation, and thereby exchange data that is relevant for the respective function and/or device 1 with the process automation system via a communication system 2. For that purpose, the devices 1 are interlinked via field buses 3 or other communication pathways together with control devices (PLCs) 4 which are in turn connected via a central system bus 5 to a central control unit 6 and an operation and observation unit 7.

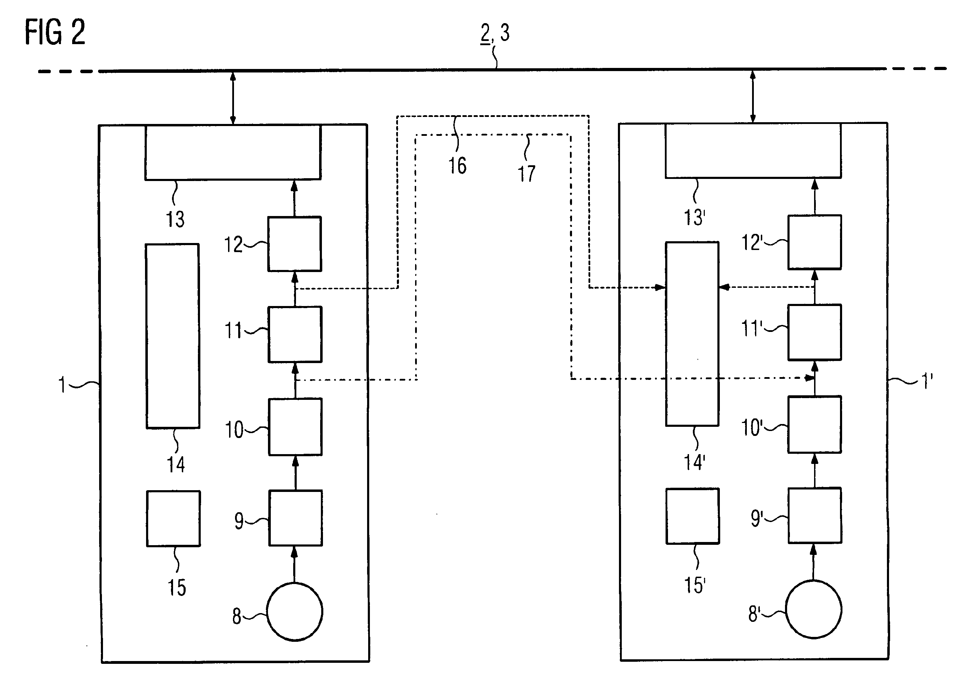

Figure 2 shows two of the peripheral devices which are redundant and referenced by numerals 1 and 1'. Both devices 1, 1' comprise the same functionalities, e.g. a pressure measurement functionality. The functionalities are subdivided into sub-functionalities which, for example, are pressure sensing 8, 8', pressure signal pre-processing 9, 9', analog-to-digital converting 10, 10', signal processing 11, 11', evaluation 12, 12' and bus communication 13, 13'. These and other functionalities may be implemented by hardware and/or software. The devices 1, 1' further each comprise a comparison unit 14, 14' and a parameterizing unit 15, 15'.

The parameterizing units 15, 15' contain parametric data for defining or modifying the sub-functionalities.

As the two devices 1, 1' are redundant, their sub-functionalities 8-13, 8'-13' are identical and, if free from defects, they should report the same pressure value to the central control unit 6. Furthermore, the input data to and output data from the corresponding sub-functionalities 8-13, 8'-13' of the redundant devices 1, 1' should be equal. The same applies to the parametric data in the parameterizing units 15, 15'.

As indicated by dashed line 16, the device 1 sends for example the output data of its sub-functionality 11 to the device 1' which in its comparison unit 14 compares these data with the corresponding output data of its own sub-functionality 11'. If the compared output data are different or if the difference is outside an acceptable tolerance, a malfunction is diagnosed. In the device 1, this procedure is performed vice versa. Further, this procedure may be performed for each of the sub-functionalities 8-13, 8'-13'.

As indicated by chain-dotted line 17, the input data of the sub-functionality 11, which is digital signal processing, are sent to the device 1' and there inputted to the corresponding sub-functionality 11'. In a next step, the output data of the sub-functionalities 11 and 11' are compared in each device 1, 1' as described in the foregoing paragraph. In this case, the devices 1, 1' do not need to be redundant; it is sufficient if the respective sub-functionalities 11 and 11' are equal.

## Claims

1. An automation system comprising a plurality of peripheral devices (1, 1') connected to a communication system (2), each device (1, 1') comprising a predefined functionality for performing a predefined function as part of the automation and for exchanging data that is relevant for the device (1, 1') or its function within the automation system, wherein at least some of the peripheral devices (1, 1') which have identical functionalities or identical sub-functionalities (8-13, 8'-13') are designed to exchange output data generated by the functionalities or sub-functionalities (8-13, 8'-13') in order to diagnose a malfunction, **characterized in that** at least some of the peripheral devices (1, 1') which have at least one identical sub-functionality (11, 11') are designed to exchange input data to be processed by said sub-functionality (11, 11') of the respective other device (1, 1') or devices (1, 1'), to compare the output data generated by the sub-functionality (11, 11') of the different devices (1, 1') and to diagnose a malfunction in case of discrepancy between the compared output data.

2. The automation system of claim 1, wherein at least two of the devices (1, 1') are redundant.

3. A method for operating an automation system comprising a plurality of peripheral devices (1, 1') connected to a communication system (2), each device (1, 1') comprising a predefined functionality for performing a predefined function as part of the automation and for exchanging data that is relevant for the device (1, 1') or its function within the automation system, wherein at least some of the peripheral devices (1, 1') which have identical functionalities or identical sub-functionalities (8-13, 8'-13') exchange output data generated by the functionalities or sub-functionalities (8-13, 8'-13') in order to a malfunction, **characterized in that** at least some of the peripheral devices (1, 1') which have at least one identical sub-functionality (11, 11') exchange input data to be processed by said sub-functionality (11, 11') of the respective other device (1, 1') or devices (1, 1'), compare the output data generated by the sub-functionality (11, 11') of the different devices (1, 1') and diagnose a malfunction in case of discrepancy between the compared output data.

4. The method of claim 3, wherein at least two of the devices (1, 1') are operated redundantly.

## Patentansprüche

1. Automatisierungssystem, das mehrere Peripheriegeräte (1, 1') umfasst, die mit einem Kommunikationssystem (2) verbunden sind, wobei jedes Gerät (1, 1') eine vordefinierte Funktionalität zum Ausführen einer vordefinierten Funktion als Teil der Automatisierung und zum Austauschen von Daten, die für das Gerät (1, 1') oder seine Funktion in dem Automatisierungssystem relevant sind, umfasst, wobei mindestens bestimmte der Peripheriegeräte (1, 1'), die identische Funktionalitäten oder identische Subfunktionalitäten (8-13, 8'-13') aufweisen, dafür ausgelegt sind, durch die Funktionalitäten oder Subfunktionalitäten (8-13, 8'-13') erzeugte Ausgangsdaten auszutauschen, um eine Fehlfunktion zu diagnostizieren, **dadurch gekennzeichnet, dass** mindestens bestimmte der Peripheriegeräte (1, 1'), die mindestens eine identische Subfunktionalität (11, 11') aufweisen, dafür ausgelegt sind, durch die Subfunktionalität (11, 11') des jeweiligen anderen Geräts (1, 1') bzw. der jeweiligen anderen Geräte (1, 1') zu verarbeitende Eingangsdaten auszutauschen, die durch die Subfunktionalität (11, 11') der verschiedenen Geräte (1, 1') erzeugten Ausgangsdaten zu vergleichen und im Fall einer Diskrepanz zwischen den verglichenen Ausgangsdaten eine Fehlfunktion zu diagnostizieren.

2. Automatisierungssystem nach Anspruch 1, wobei mindestens zwei der Geräte (1, 1') redundant sind.

3. Verfahren zum Betrieb eines Automatisierungssystems, das mehrere Peripheriegeräte (1, 1') umfasst, die mit einem Kommunikationssystem (2) verbunden sind, wobei jedes Gerät (1, 1') eine vordefinierte Funktionalität zum Ausführen einer vordefinierten Funktion als Teil der Automatisierung und zum Austauschen von Daten, die für das Gerät (1, 1') oder seine Funktion in dem Automatisierungssystem relevant sind, umfasst, wobei mindestens bestimmte der Peripheriegeräte (1, 1'), die identische Funktionalitäten oder identische Subfunktionalitäten (8-13, 8'-13') aufweisen, dafür ausgelegt sind, durch die Funktionalitäten oder Subfunktionalitäten (8-13, 8'-13') erzeugte Ausgangsdaten auszutauschen, um eine Fehlfunktion zu diagnostizieren, **dadurch gekennzeichnet, dass** mindestens bestimmte der Peripheriegeräte (1, 1'), die mindestens eine identische Subfunktionalität (11, 11') aufweisen, dafür ausgelegt sind, durch die Subfunktionalität (11, 11') des jeweiligen anderen Geräts (1, 1') bzw. der jeweiligen anderen Geräte (1, 1') zu verarbeitende Eingangsdaten auszutauschen, die durch die Subfunktionalität (11, 11') der verschiedenen Geräte (1, 1') erzeugten Ausgangsdaten zu vergleichen und im Fall einer Diskrepanz zwischen den verglichenen Ausgangsdaten eine Fehlfunktion zu diagnostizieren.

4. Verfahren nach Anspruch 3, wobei mindestens zwei der Geräte (1, 1') redundant betrieben werden.

## Revendications

1. Système d'automatisation, comprenant une pluralité de dispositifs ( 1, 1') périphériques reliés à un système ( 2 ) de communication, chaque dispositif ( 1, 1' ) comprenant une fonctionnalité définie à l'avance pour effectuer une fonction définie à l'avance en tant que partie de l'automatisation et pour échanger une donnée, qui est pertinente pour le dispositif ( 1, 1' ) ou sa fonction au sein du système d'automatisation, dans lequel au moins certains des dispositifs ( 1, 1' ) périphériques, qui ont des fonctionnalités identiques ou des sous-fonctionnalités ( 8 à 13, 8' à 13' ) identiques, sont conçus pour échanger une donnée de sortie produite par les fonctionnalités ou les sous-fonctionnalités ( 8 à 13, 8' à 13' ), afin de diagnostiquer un disfonctionnement, **caractérisé en ce qu'**au moins certains des dispositifs ( 1, 1' ) périphériques, qui ont au moins une sous-fonctionnalité ( 11, 11' ) identique, sont conçus pour échanger une donnée d'entrée à traiter par ladite sous-fonctionnalité ( 11, 11' ) de l'autre dispositif ( 1, 1' ) respectif ou des dispositifs ( 1, 1' ), pour comparer la donnée de sortie produite par la sous-fonctionnalité ( 11, 11' ) des dispositifs ( 1, 1' ) différents et pour diagnostiquer un disfonctionnement, dans le cas d'une divergence entre les données de sortie comparées.

2. Système d'automatisation suivant la revendication 1, dans lequel au moins deux des dispositifs ( 1, 1' ) sont redondants.

3. Procédé pour faire fonctionner un système d'automatisation, comprenant une pluralité de dispositifs ( 1, 1' ) périphériques reliés à un système ( 2 ) de communication, chaque dispositif ( 1, 1' ) comprenant une fonctionnalité définie à l'avance pour effectuer une fonction définie à l'avance en tant que partie de l'automatisation et pour échanger une donnée qui est pertinente pour le dispositif ( 1, 1' ) ou sa fonction au sein du système d'automatisation, dans lequel au moins certains des dispositifs ( 1, 1' ) périphériques, qui ont des fonctionnalités identiques ou des sous-fonctionnalités ( 8 à 13, 8' à 13' ) identiques, sont conçus pour échanger une donnée de sortie produite par les fonctionnalités ou les sous-fonctionnalités ( 8 à 13, 8' à 13' ), afin de diagnostiquer un disfonctionnement, **caractérisé en ce qu'**au moins certains des dispositifs ( 1, 1' ) périphériques, qui ont au moins une sous-fonctionnalité ( 11, 11' ) identique, échangent des données d'entrée à traiter par ladite sous-fonctionnalité ( 11, 11' ) de l'autre dispositif ( 1, 1' ) respectif ou des dispositifs ( 1, 1' ), comparent la donnée de sortie produite par la sous-fonctionnalité ( 11, 11' ) du dispositif ( 1, 1' ) différent et diagnostiquent un disfonctionnement, dans le cas d'une divergence entre les données de sortie comparées.

4. Procédé suivant la revendication 3, dans lequel on fait fonctionner deux des dispositifs ( 1, 1' ) de manière redondante.
